# EUROPÄISCHE PATENTSCHRIFT

(11) **EP 2 550 725 B1**
(45) Veröffentlichungstag und Bekanntmachung des Hinweises auf die Patenterteilung: **24.12.2014**
(21) Anmeldenummer: 11703701.0
(22) Anmeldetag: 17.02.2011
(51) Int. Cl.: H02K 35/02

(54) **INDUKTIONSGENERATOR**
INDUCTION GENERATOR
GENERATEUR A INDUCTION

(30) Priorität: 05.05.2010 DE 102010028622; 23.03.2010 DE 102010003151; 23.03.2010 DE 102010003152
(43) Veröffentlichungstag der Anmeldung: 30.01.2013
(73) Patentinhaber: ZF Friedrichshafen AG, 88038 Friedrichshafen (DE)
(72) Erfinder: RUFF, Eduard, 91275 Auerbach (DE)
(86) Internationale Anmeldenummer: PCT/EP2011/052327
(87) Internationale Veröffentlichungsnummer: WO 2011/117031

(56) Entgegenhaltungen:
- WO-A1-2004/093299
- DE-A1- 2 728 629
- US-A1- 2008 315 595

## Beschreibung

Die vorliegende Erfindung betrifft einen Induktionsgenerator für einen Funkschalter gemäß dem Oberbegriff von Anspruch 1.

Im Stand der Technik sind zahlreiche Induktionsgeneratoren vorgeschlagen worden, welche wie vorliegend zur Verwendung in einem energieautarken Funkschalter einsetzbar sind.

Die Druckschrift DE 101 25 059 A1 zeigt z.B. einen induktiven Spannungsgenerator, welcher einen mechanischen Energiespeicher aufweist. Der Energiespeicher speichert Betätigungsenergie bis ein Umschlagpunkt erreicht ist, bei Erreichen dessen sich ein Permanentmagnet des Induktionssystems schlagartig bewegt. Infolge der Bewegung ändert sich der magnetische Fluss schlagartig, wobei der Permanentmagnet am Anfang oder am Ende der Bewegung auf den Kern aufschlägt.

Die Druckschrift US 3,693,033 zeigt einen als Taster ausgebildeten Impulsgenerator, bei welchem ein Kern eines ersten Permanentmagneten durch Bewegung des Tasters in eine Spule eintaucht. Das Magnetfeld eines weiteren Permanentmagneten hält den ersten Permanentmagneten, bis die in den Taster eingebrachte Betätigungsenergie ein schnelles Lösen und ein Eintauchen in die Spule ermöglicht, was ein kurzes Spannungssignal zur Folge hat.

Die DE 103 15 765 B4 zeigt einen elektromagnetischen Energiewandler, bei welchem ein von einer Spule umschlossenes Element relativ zu einem Permanentmagneten drehbewegt werden kann, wobei in einer ersten und einer zweiten Ruhelage der magnetische Fluss durch das bewegliche Element jeweils geschlossen ist. Der Energiewandler ist derart ausgebildet, dass auch infolge einer langsamen Betätigung genügend Energie zum Betrieb eines Funkschalters gewandelt wird. Dazu kann das bewegliche Element durch Betätigung zwischen erster und zweiter Stellung jeweils nach Überwindung der Magnetkräfte umklappen.

Die DE 198 52 470 A1 zeigt ein Energieerzeugungssystem, bei welchem Dauermagneten in einem Schwingkreis an einer Induktionsspulenanordnung vorbeibewegt werden.

DE 27 28 629 A1 offenbart einen Induktionsgenerator mit den oberbegrifflichen Merkmalen des Patentanspruchs 1.

Um einen Funkschalter wie vorliegend hochgradig miniaturisierbar auszubilden, muss regelmäßig trotz einer kleinen Baugröße des Induktionssystems eine hohe elektrische Energie aus dem mechanischen Betätigungsvorgang des Schalters generiert werden. In dieser Hinsicht sind die bekannten Lösungen verbesserungsfähig.

Ausgehend hiervon liegt der vorliegenden Erfindung die Aufgabe zugrunde, einen alternativen, miniaturisierbaren Induktionsgenerator für einen Funkschalter vorzuschlagen, welcher bei einer kleinen Baugröße des Induktionssystems eine große Energiemenge bei Betätigung erzeugt.

Diese Aufgabe wird erfindungsgemäß durch die Merkmale des Anspruchs 1 gelöst.

Vorgeschlagen wird erfindungsgemäß ein Induktionsgenerator für einen Funkschalter mit einem Magnetelement sowie einer Induktionsspule mit einem Spulenkern, wobei der Spulenkern U-förmig gebildet ist, wobei für das Magnetelement eine erste und eine zweite Anlageposition an den Schenkeln des Spulenkerns definiert ist, bei Wechsel zwischen welchen jeweils eine Flussrichtungsumkehr im Spulenkern erfolgt, wobei das Magnetelement in einer Richtung, in welcher die Schenkel zueinander benachbart sind, zwischen den Anlagepositionen definiert linear beweglich an dem Induktionsgenerator angeordnet ist. Dabei wirkt das Magnetelement zur mechanisch beschleunigten Bewegung zwischen den Anlagepositionen mit einem ersten mechanischen Federspeicher zusammen, welcher bis zu einem bestimmten Energieniveau Auslöseenergie speichert, wobei ab Überschreiten des Energieniveaus ein Lösen des Magnetelementes aus der ersten oder zweiten Anlageposition ermöglicht ist, welche nach Verlassen der Anlageposition zur Beschleunigung des Magnetelements freisetzbar ist. Der Induktionsgenerator weist ferner einen zweiten mechanischen Federspeicher zur Erzeugung einer Rückstellkraft für eine Bewegung des Magnetelements aus der zweiten in die erste Anlageposition auf, welcher integral mit dem ersten mechanischen Federspeicher gebildet oder mit diesem verbunden ist.

Das Magnetelement bildet dabei in der Richtung, in welcher die Schenkel zueinander benachbart sind, drei Anlageelemente vorbestimmter magnetischer Polarität aus, wobei jeweils zwei benachbarte Anlageelemente unterschiedlicher magnetischer Polarität in jeder Anlageposition zur Anlage an den Schenkeln bringbar sind.

Bei einer erfindungsgemäßen Ausführungsform des Induktionsgenerators ist das Magnetelement mittels einer Führungsvorrichtung definiert linear beweglich an dem Induktionsgenerator angeordnet.

Bei einer weiteren erfindungsgemäßen Ausführungsform des Induktionsgenerators weist das Magnetelement einen E-förmigen Querschnitt auf.

Gemäß einem Aspekt des erfindungsgemäßen Induktionsgenerators erstrecken sich die Schenkel des Spulenkerns jeweils zwischen zwei benachbarte Anlageelemente des Magnetelements, tauchen insbesondere zwischen jeweils zwei benachbarten Schenkeln der E-Form ein.

Vorgeschlagen wird erfindungsgemäß eine Ausführungsform des Induktionsgenerators, wobei der erste und der zweite Federspeicher einstückig als stegförmiges Federelement gebildet sind, wobei ein Krafteinleitungsbereich in einem Mittenbereich des stegförmigen Federelements vorgesehen ist.

Vorgeschlagen wird erfindungsgemäß weiterhin eine Ausführungsform des Induktionsgenerators, wobei das stegförmige Federelement sich in einer Richtung, in welcher die Schenkel zueinander benachbart sind, von einem ersten stirnseitigen Ende der Induktionsspule zu einem weiteren, zu dem Magnetelement benachbarten stirnseitigen Ende erstreckt, wobei ein erstes Ende des stegförmigen Federelements an dem ersten Ende abgestützt ist, und wobei ein zweites Ende mit dem Magnetelement zur Einleitung einer Kraft in der Richtung, in welcher die Schenkel zueinander benachbart sind, gekoppelt ist.

Weiterhin wird erfindungsgemäß ein Funkschalter mit einer Senderbaugruppe und einer Antenne vorgeschlagen, wobei der Funkschalter einen erfindungsgemäßen Induktionsgenerator aufweist.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen.

Bevorzugte Ausführungsformen der Erfindung werden nachfolgend anhand der beigefügten Zeichnungen näher erläutert. Es zeigen:
- Fig. 1: exemplarisch eine Ansicht eines Induktionssystems eines erfindungsgemäßen Induktionsgenerators gemäß einer Ausführungsform der Erfindung; und
- Fig. 2: exemplarisch ein Magnetelement zur Bildung eines Induktionsgenerators gemäß einer Ausführungsform der Erfindung;
- Fig. 3: exemplarisch ein Magnetelement zur Bildung eines Induktionsgenerators gemäß einer weiteren Ausführungsform der Erfindung;
- Fig. 4a) und b): exemplarisch das Zusammenwirken des Magnetelements nach Fig. 1 und 2 mit den Schenkeln in der ersten und zweiten Anlageposition;
- Fig. 5: exemplarisch das Zusammenwirken des Magnetelements mit einem ersten und/oder einem zweiten mechanischen Federspeicher gemäß einer Ausführungsform der Erfindung; und
- Fig. 6: exemplarisch ein Induktionssystem mit einem stegförmigen Federelement gemäß einer Ausführungsform der Erfindung.

In der nachfolgenden Beschreibung und den Zeichnungen sind gleiche Elemente oder vergleichbare Funktionen mit gleichen Bezugszeichen versehen.

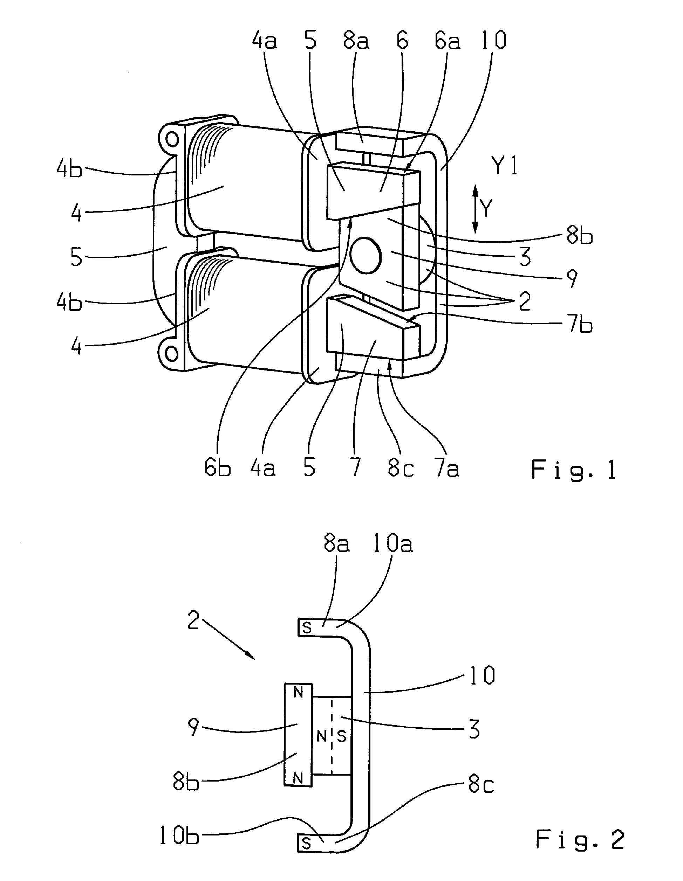

Fig. 1 zeigt exemplarisch ein Induktionssystem 1 eines erfindungsgemäßen Induktionsgenerators. Ein solcher ist insbesondere in einem Funkschalter einsetzbar. Der erfindungsgemäße Induktionsgenerator ermöglicht die Abgabe einer sehr hohen Energiemenge relativ zu dem damit erzielbaren Miniaturisierungsgrad. Der Induktionsgenerator ist äußerst kompakt ausbildbar, z.B. als Mikrogenerator, insbesondere als einstückiges Modul ausbildbar.

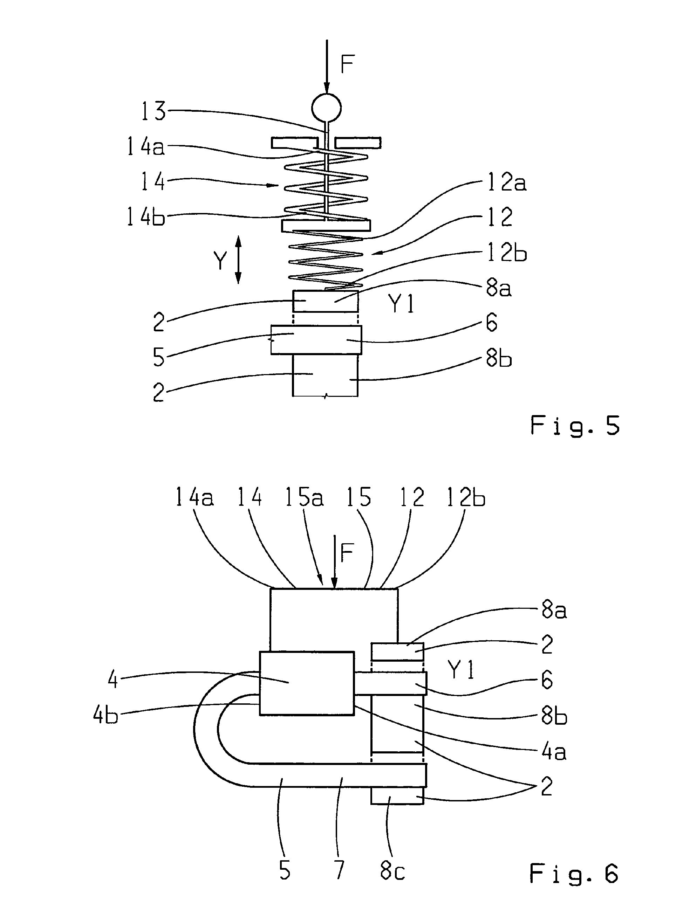

Das erfindungsgemäße Induktionssystem 1 des Induktionsgenerators weist zur Energieerzeugung ein Magnetelement 2 mit mindestens einem Permanentmagneten 3 auf, sowie wenigstens eine Induktionsspule 4 mit einem U-förmigen Spulenkern 5 (z.B. Fig. 6). Das Induktionssystem 1 weist z.B. zwei Induktionsspulen 4 mit einem gemeinsamen Spulenkern 5 auf (Fig. 1), z.B. eine Doppelspule oder zwei separat gewickelte Spulen. Mit zwei Induktionsspulen 4 lässt sich z.B. deutlich mehr Energie bei kleinsten Dimensionen erzeugen als bei Verwendung einer einzigen Spule. Das Magnetelement 2 ist insbesondere z.B. benachbart zu einer Stirnseite 4a der Induktionsspule 4 angeordnet, an welcher die Schenkelenden der Schenkel 6, 7 des Spulenkerns 5 freiliegen.

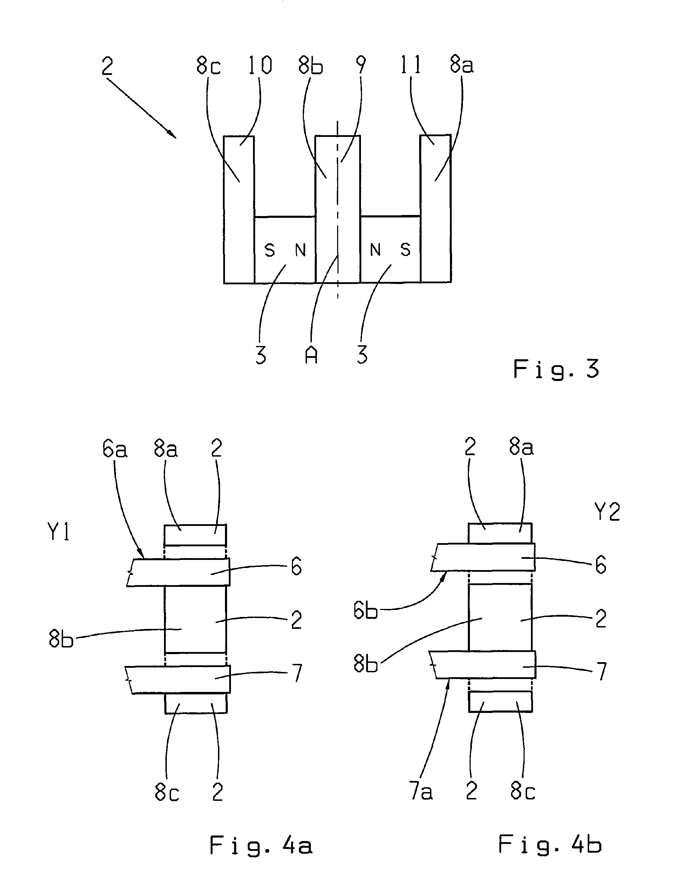

Das Magnetelement 2 ist erfindungsgemäß, wie dies schematisch in Fig. 4a) und b) dargestellt ist, zwischen zwei definierten Ruhestellungen bzw. definierten Anlagepositionen Y1, Y2 in einer Richtung, in welcher die Schenkel 6, 7 zueinander benachbart sind (Y-Richtung in Fig. 1), definiert linear bewegbar (hin- und her), wobei das Magnetelement 2 in jeder Anlageposition Y1, Y2 gleichzeitig zur Anlage an jeweils beiden Schenkeln 6, 7 gelangt, insbesondere an den (freiliegenden) Schenkelenden. Dadurch ergibt sich in jeder Anlageposition Y1, Y2 ein geschlossener magnetischer Ringfluss durch das Magnetelement 2 und den Spulenkern 5. Durch die linear bewegliche Anordnung des Magnetelements 2 kann ein klein bauendes Induktionssystem 1 und insofern ein klein bauender Induktionsgenerator erhalten werden. Die Schenkel 6, 7 erstrecken sich dabei vorzugsweise parallel zueinander.

Das Magnetelement 2 bildet, um bei einem Wechsel der Anlagepositionen den Spulenkern 5 umpolen zu können, drei in der Richtung, in welcher die Schenkel 6, 7 zueinander benachbart sind, benachbarte Polelemente bzw. Anlageelemente 8a, b, c unterschiedlicher, abwechselnder Polarität aus, i.e. magnetisch Nord und Süd. Zwei Anlageelemente 8a, 8c gleicher Polarität sind z.B. dazu vorgesehen, jeweils eine in der vorgesehenen Bewegungsrichtung liegende Außenseite 6a, 7a der Schenkel 6, 7 in Abhängigkeit der jeweiligen Anlageposition Y1 bzw. Y2 kontaktieren zu können, während ein weiteres Anlageelement 8b davon verschiedener Polarität jeweils eine in dieser Richtung liegende Innenseite 6b, 7b kontaktieren kann. Erfindungsgemäß gelangt das Anlageelement 8b zur Kontaktierung einer Innenseite 6b, 7b in einer Anlageposition Y1 bzw. Y2 jeweils an dem Schenkel 6 bzw. 7 zur Anlage, an welchem gerade kein Anlageelement 8a, 8c zur Kontaktierung einer Außenseite 6a, 7a anliegt und umgekehrt.

Mittels eines derartigen Magnetelements 2, welches vorzugsweise eine E-Form bzw. einen E-förmigen Querschnitt (z.B. Fig. 2 und 3) aufweist, deren Schenkel mittels der Anlageelemente 8a, 8b, 8c gebildet sind, kann in der ersten Anlageposition Y1 des Magnetelements 2, entsprechend einer Ausgangsposition (Fig. 1), somit ein Paar von Anlageelementen 8b, 8c erster unterschiedlicher Polarität an den Schenkeln 6, 7 anliegen, z.B. magnetisch Nord (N) an dem ersten Schenkel 6 und magnetisch Süd (S) an dem zweiten Schenkel 7, während in der zweiten Anlageposition Y2 (Magnetelement linear verlagert) ein Paar von Anlageelementen 8a, 8b mit im Vergleich zur ersten Anlageposition Y1 invertierter Polarität an den Schenkeln 6, 7 anliegt, i.e. z.B. magnetisch Süd (S) an dem ersten Schenkel 6 und magnetisch Nord (N) an dem zweiten Schenkel 7. Die E-Form ermöglicht, dass sich die Schenkel 6, 7 in das Magnetelement 3 erstrecken bzw. darin eintauchen können. Daneben sind weitere Formen denkbar.

Fig. 1 in der perspektivischen Ansicht und Fig. 2 schematisch im Schnitt zeigen exemplarisch ein mögliches erfindungsgemäßes Magnetelement 2, welches asymmetrisch gebildet ist. Das Magnetelement 2 besteht z.B. aus einem Dauermagneten 3, welcher einen magnetischen Nordpol (N) und einen magnetischen Südpol (S) in einer Richtung quer zur Richtung, in welcher die Schenkel 6, 7 zueinander benachbart sind, ausbildet, sowie daran angeordneten Polschuhen 9, 10. Der erste Polschuh 9, welcher z.B. trapezförmig gebildet ist, ist zur z.B. Anlage an den z.B. jeweils korrespondierend angeschrägten Innenseiten 6b, 7b vorgesehen und weist aufgrund seiner Verbindung mit dem Permanentmagneten 3 eine erste Polarität auf. Der erste Polschuh 9 bildet, ggf. zusammen mit dem Permanentmagneten 3, den mittleren Schenkel des E-förmigen Magnetelements 2.

Im Zuge einer linearen Bewegung des Magnetelements 2 kann der erste Polschuh 9 bei Erreichen der einen Anlageposition Y1 bzw. Y2 an dem einen Schenkel 6 bzw. 7 bzw. bei Erreichen der anderen Anlageposition Y2 bzw. Y1 an dem anderen Schenkel 7 bzw. 6 zur Anlage gebracht werden, insbesondere jeweils an einer in Bewegungsrichtung liegenden Schenkelinnenseite 6b, 7b.

Der zweite Polschuh 10, welcher aufgrund seiner Verbindung mit dem Permanentmagneten 3 eine zweite, von der des ersten Polschuhs 9 verschiedene Polarität aufweist, erstreckt sich benachbart zu den Schenkeln 6, 7 in der Richtung, in welcher diese zueinander benachbart sind. Der zweite Polschuh 10 ist dazu z.B. bügelförmig oder klammerförmig gebildet. Die Endabschnitte 10a, 10b, korrespondierend mit den Außenschenkeln der E-Form des Magnetelements bzw. den Schenkeln der Klammerform, bilden dabei jeweils ein Anlageelement 8a, 8c zur Anlage an einem Schenkel 6, 7, wovon jeweils eines im Zuge einer linearen Bewegung gegen den einen 6 oder den anderen 7 Schenkel zur Anlage gebracht werden kann, insbesondere jeweils an einer in Bewegungsrichtung befindlichen Schenkelaußenseite 6a, 7a.

Die Anlageelemente 8a, b, c, z.B. in Form des Polschuhes 9 oder der Endabschnitte 10a, 10b bilden insbesondere Anschlagselemente für die eingetauchten Schenkel 6, 7, welche den Bewegungsumfang des Magnetelements 2 im Induktionsgenerator relativ zu den Schenkeln 6, 7 begrenzen.

Im Zuge einer linearen Bewegung des Magnetelements 2 kann der zweite Polschuh 10 bei Erreichen der einen Anlageposition Y1 bzw. Y2 mit dem einen Anlageelement 8c bzw. 8a an dem anderen Schenkel 7 bzw. 6 bzw. bei Erreichen der anderen Anlageposition Y2 bzw. Y1 mit dem anderen Anlageelement 8a bzw. 8c an dem einen Schenkel 6 bzw. 7 zur Anlage gebracht werden.

Beide Polschuhe 9, 10 sind in der gezeigten Ausführungsform zur gemeinsamen Bewegung mittels des Permanentmagneten 3 insbesondere starr miteinander verbunden.

Fig. 3 zeigt schematisch eine weitere Ausführungsform eines erfindungsgemäßen Magnetelements 2, welches vorteilhaft bezüglich einer Mittelachse A symmetrisch ausgebildet ist. Das Magnetelement 2 gemäß Fig. 3 weist zum Beispiel zwei Permanentmagnete 3 auf sowie drei quaderförmige Polschuhe 9, 10, 11. Zwischen zwei Polschuhen 9, 10 bzw. 9, 11 ist jeweils ein Permanentmagnet 3 angeordnet, derart, dass mittels der Polschuhe 9, 10, 11 drei Anlageelemente 8a, 8b, 8c unterschiedlicher, abwechselnder Polarität gebildet werden. Dazu weisen die Permanentmagnete 3 jeweils mit gleicher Polarität zu dem mittleren Polschuh 9. Das derart gebildete Magnetelement 2 weist wiederum insbesondere E-förmigen Querschnitt auf, wobei die Polschuhe 9, 10, 11 die Schenkel der E-Form ausbilden, zwischen welchen die Schenkel 6, 7 des Spulenkerns 5 eintauchen können. Die Schenkel 6, 7 weisen dabei z.B. ungeschrägte Anlageflächen 6b, 7b auf.

Eine Anordnung, bei welcher das Magnetelement 2 jeweils an einer Innenseite 6b, 7b eines Schenkels 6, 7 und einer Außenseite 7a, 6a je eines anderen Schenkels 7, 6 gleichzeitig zur Anlage gelangen kann, kann z.B. dadurch ermöglicht werden, dass der Abstand zwischen den (Außen-)Anlageelementen 8a, 8c in Y-Richtung abzüglich des kleineren Abstands der Schenkelaußenseiten 6a, 7a gleich dem Abstand der Schenkelinnenseiten 6b, 7b abzüglich der kleineren Ausdehnung des (Innen-)Anlageelements 8b in Y-Richtung gewählt ist, wobei das Magnetelement 2 als auch die Schenkel 6, 7 jeweils eine Symmetrieebene aufweisen, welche sich in Querrichtung erstreckt. Mittels einer solchen Anordnung kann zudem vorteilhaft eine schlagartige Trennung von Magnetelement 2 und Schenkeln 6, 7 infolge einer Krafteinwirkung in der vorgesehenen Bewegungsrichtung Y erfolgen, insofern als zusätzlich zu den magnetischen Haltekräften kaum Reibkräfte auf die Anlageelemente 8a, b, c einwirken.

Zur Bildung eines erfindungsgemäßen Magnetelements 2 werden die Polschuhe 9, 10 und ggf. 11 zusammen mit dem/den Permanentmagneten 3 zum Beispiel umspritzt. Insbesondere mittels des symmetrisch ausgebildeten Magnetelements 2 ist dabei ein einfacher und kostengünstiger Aufbau eines platzsparenden Induktionsgenerators erzielbar.

Das erfindungsgemäße Magnetelement 2 kann bei der erfindungsgemäß ausschließlich linearen Bewegung zwischen den Anlagepositionen ab Verlassen einer Anlageposition Y1, Y2 bis zur Einnahme der weiteren Anlageposition Y2, Y1 erfindungsgemäß außer Anlage am Spulenkern 5 gelangen, derart, dass eine schnelle Bewegung relativ zu den Schenkeln 6, 7 bei einem Wechsel der Anlagepositionen Y1, Y2 einhergehend mit einer hohen durch das Induktionssystem 1 erzeugten Energiemenge ermöglicht ist.

Der Induktionsgenerator weist erfindungsgemäß weiterhin eine Führungsvorrichtung auf (nicht dargestellt), welche ermöglicht, nach Lösen des Magnetelements 2 aus einer Anlageposition Y1 bzw. Y2, dieses ausschließlich linear in der Richtung Y, in welcher die Schenkel 6, 7 zueinander benachbart sind, definiert zu bewegen, i.e. in die andere definierte Anlageposition Y2 bzw. Y1. Durch die Führungsvorrichtung werden, insbesondere in Verbindung mit den Anlageelementen 8a, b, c, die Anlagepositionen Y1, Y2 als auch der lineare Bewegungsweg definiert.

Zur Führung des Magnetelements 2 weist die Führungsvorrichtung zum Beispiel einen Führungskäfig auf, in welchem das Magnetelement in der vorgesehenen Bewegungsrichtung Y beweglich aufgenommen ist und z.B. zugleich gegen Lösen vom Induktionsgenerator gesichert werden kann. Eine solche Führungsvorrichtung kann insbesondere an der den Schenkelenden zugewandten Stirnseite 4a der Induktionsspule 4 gebildet sein. Die Führungsvorrichtung kann zum Beispiel eine Kulisse oder eine in Bewegungsrichtung Y verlaufende Profilschiene aufweisen, in welcher mindestens ein geführtes Element des Magnetelements 2, 2', z.B. ein Eingriffselement gefangen bzw. geführt ist. Die Führungsvorrichtung ist z.B. integral mit einem Spulenkörper der Induktionsspule 4 gebildet, z.B. als Kunststoffteil.

Um das Magnetelement 2 am Induktionsgenerator zwischen den Anlagepositionen Y1 bzw. Y2 linear in der Richtung, in welcher die Schenkel 6, 7 zueinander benachbart sind, bewegen zu können, kann eine Kraft, i.e. eine Auslösekraft, in das Magnetelement 2 in dieser Richtung eingeleitet werden. Dazu weist der Induktionsgenerator z.B. ein Eingriffselement zur Betätigung auf, z.B. ein Bedienelement, mittels welchem eine Betätigungskraft F korrespondierend mit einer Auslösekraft auf das Magnetelement 2 einwirken kann. Das Bedienelement kann z.B. durch das Anlageelement 8a oder 8c gebildet sein oder z.B. separat davon.

Erfindungsgemäß ist dabei vorgesehen, dass das Magnetelement 2 zur mechanisch beschleunigten Bewegung zwischen den Anlagepositionen Y1, Y2 mit einem ersten mechanischen Energiespeicher bzw. Federspeicher 12 zusammenwirkt (Fig. 5), welcher bis zu einem bestimmten Energieniveau Auslöseenergie, i.e. zur Erzielung bzw. Erzwingung einer Bewegung beaufschlagte Energie, speichert. Ab Überschreiten des Energieniveaus ist ein Lösen des Magnetelements 2 aus der ersten Y1 oder zweiten Y2 Anlageposition sowie eine lineare Bewegung in die andere Anlageposition Y2 oder Y1 vorgesehen, wobei nach Verlassen der Anlageposition Y1 bzw. Y2 die gespeicherte Energie erfindungsgemäß zur Beschleunigung des Magnetelements 2 freisetzbar ist.

Der erste mechanische Federspeicher 12 ist dazu z.B. als Eingriffselement zur Betätigung des Induktionsgenerators gebildet oder weist ein Eingriffselement 13 auf, derart, dass eine Betätigungskraft F korrespondierend mit einer Auslösekraft direkt in den ersten mechanischen Federspeicher 12 eingeleitet werden kann. Sobald der mechanische Federspeicher 12 bis zu dem bestimmten Energieniveau Auslöseenergie gespeichert hat, kann weiter zugeführte Energie an das Magnetelement 2 abgegeben werden.

Ein geeigneter erster mechanischer Federspeicher 12 ist z.B. als federelastisch verformbares Element ausgebildet und z.B. mit dem Magnetelement 2 zur Krafteinleitung in einer vorgesehenen Bewegungsrichtung Y gekoppelt. Ab Erreichen einer vorgesehenen elastischen Verformung des ersten mechanischen Federspeichers 12 infolge z.B. einer Betätigung, welche mit einem bestimmten Energieniveau korrespondiert, kann aufgrund der zunehmenden Biegesteifigkeit bei fortgesetzter Krafteinleitung in den ersten mechanischen Federspeicher 12 nunmehr infolge der Kopplung vermehrt Kraft in der vorgesehenen linearen Bewegungsrichtung Y auf das durch die Magnethaltekräfte am Spulenkern 5 gehaltene Magnetelement 2 übertragen und das Magnetelement 2 aus der Anlageposition Y1 bzw. Y2 bewegt werden.

Der erste am Magnetelement 2 angekoppelte mechanische Federspeicher 12 ist zum Beispiel als Schraubenfeder gebildet, welche durch Einleiten einer Kraft, i.e. einer Auslösekraft elastisch verformbar ist, bis jeweils ein bestimmtes Energieniveau erreicht ist. Zur Erzielung einer Bewegung von der ersten Y1 in die zweite Y2 Anlageposition wird die Schraubenfeder z.B. komprimiert, während sie zur Erzielung einer Rückbewegung gedehnt wird. Der erste mechanische Federspeicher 12 weist z.B. ein erstes Ende 12a zur Einleitung einer Auslösekraft bzw. als Eingriffsende auf, während ein weiteres Ende 12b mit dem Magnetelement 2 gekoppelt ist bzw. gegen dieses arbeitet. Das erste Ende 12a ist dabei infolge einer Krafteinleitung relativ zu dem zweiten Ende 12b verlagerbar, i.e. nicht ortsfest, so dass Energie durch elastische Verformung speicherbar ist. Alternativ kann der erste mechanische Federspeicher 12 zum Beispiel als blattförmige Feder gebildet sein.

Mit Einsetzen einer Bewegung des Magnetelements 2 einhergehend mit einer Überwindung der magnetischen Haltekraft aufgrund eingeleiteter Auslösekraft kann sich der erste mechanische Federspeicher 12 erfindungsgemäß an dem nunmehr weitgehend unbelasteten, mit dem Magnetelement 2 gekoppelten Ende 12b entspannen und die gespeicherte Energie freisetzen bzw. an das Magnetelement 2 zur mechanischen Beschleunigung der Bewegung in die andere Anlageposition Y2 abgeben, insbesondere schlagartig.

Ferner weist der Induktionsgenerator 1 erfindungsgemäß einen zweiten mechanischen Energiespeicher bzw. Federspeicher 14 zur Erzeugung einer Rückstellkraft für eine Bewegung des Magnetelements 2 aus der zweiten Y2 in die erste Y1 Anlageposition auf, welcher integral mit dem ersten mechanischen Federspeicher gebildet oder damit verbunden ist. Der zweite mechanische Federspeicher 14, z.B. in Form eines weiteren federelastisch verformbaren Elements, weist ein relativ zu der Induktionsspule 4 ortsfestes Ende 14a auf als auch ein mit dem ersten Ende 12a des ersten mechanischen Federspeicher 12 verbundenes Ende 14b. Der zweite mechanische Energiespeicher 14 speichert während der Bewegung des Magnetelements 2 von der ersten Y1 in die zweite Anlageposition Y2 zunehmend Energie, z.B. durch zunehmende elastische Verformung. Der zweite mechanische Federspeicher 14 ist z.B. als Schraubenfeder ausgebildet und kann z.B. im Zuge einer Bewegung des Magnetelements 2 in die zweite Anlageposition Y2 zunehmend gedehnt werden.

Mittels der gespeicherten Energie des zweiten mechanischen Federspeichers kann eine Rückbewegung des Magnetelements 2 aus der zweiten Anlageposition Y2 erfolgen, i.e. bei Fortfall einer eingeleiteten Betätigungskraft. Geeigneter Weise ist der zweite mechanische Federspeicher 14 z.B. bereits in der ersten Anlageposition Y1 des Magnetelements 2 in einer Richtung entgegen einer Betätigungskraftrichtung vorgespannt, i.e. derart, dass das Magnetelement 2 in die erste Anlageposition Y1 gedrängt wird.

Vor einer Bewegung aus der zweiten Anlageposition Y2 speichert dabei erfindungsgemäß wiederum der erste mechanische Federspeicher Auslöseenergie, i.e. verursacht durch die durch den zweiten mechanischen Federspeicher 14 bereitgestellte Rückstellkraft, welche auf das erste Ende 12a einwirkt, bis ein bestimmtes Energieniveau erreicht ist, z.B. durch erneute elastische Verformung, und ein Lösen von den Schenkeln bzw. eine Bewegung des Magnetelements 2 hin zur ersten Ausgangsposition Y1 erfolgen kann. Die gespeicherte Auslöseenergie im ersten mechanischen Federspeicher 12 wird zur beschleunigten Bewegung im Zuge einer Bewegung nach Lösen von den Schenkeln 6, 7 wiederum an das Magnetelement 2 abgegeben, insbesondere schlagartig, derart, dass eine hohe Energiemenge infolge einer mechanisch zusätzlich beschleunigten Bewegung zurück in die erste Anlageposition Y1 erzielbar ist.

Der erste 12 und der zweite 14 mechanische Federspeicher sind erfindungsgemäß zum Beispiel integral als blattförmiges Federelement 15 bzw. als Federsteg gemäß z.B. Fig. 6 gebildet, z.B. als Federbügel, welches mit einem Ende 14a ortsfest an der Induktionsspule 4 abgestützt ist, und mit einem weiteren Ende 12b zur Krafteinleitung in Bewegungsrichtung Y an das Magnetelement 2 gekoppelt ist. Das Federelement 15 ist zum Beispiel als Stanzbiegebauteil aus einem Blechstreifen kostengünstig herstellbar.

Ein geeignetes erfindungsgemäßes stegförmiges Federelement 15, z.B. in Form eines Federbügels, welches gleichzeitig als Krafteinleitungselement für eine Betätigungskraft F vorgesehen ist, erstreckt sich zum Beispiel stegförmig von einem den Schenkelenden abgewandten stirnseitigen Ende 4b der Induktionsspule 4 hin zu dem Magnetelement 2 entlang der Induktionsspule 4 in Y-Richtung dazu benachbart, wobei das stegförmige Federelement 15 in der Richtung, in welcher die Schenkel 6, 7 zueinander benachbart sind, durch Einleiten einer Kraft elastisch verformbar ist.

Durch Wahl eines Krafteinleitungsbereichs zwischen den Enden 12b, 14a, z.B. in einem Mittenbereich 15a des stegförmigen Federelements 15, können die benachbart zum Krafteinleitungsbereich 15a befindlichen Stegabschnitte des Stegelements bei Einleitung einer Betätigungskraft F durch elastische Verformung jeweils Energie speichern, bis aufgrund zunehmender Biegesteifigkeit eine Bewegung des Magnetelements 2 bzw. ein Lösen aus der Anlageposition Y1 erfolgt. Infolge der Bewegung kann sich der mit dem Magnetelement 2 verbundene Stegabschnitt, i.e. der erste mechanische Federspeicher 12, entspannen und die Energie an das Magnetelement 2 abgeben, während der mit der Induktionsspule 4 verbundene Stegabschnitt, i.e. der zweite mechanische Federspeicher 14, weiter verformt wird, derart, dass eine Rückstellkraft erzeugbar ist, welche entgegen der Betätigungskraftrichtung wirkt. Im Krafteinleitungsbereich 15a ist zum Beispiel ein Eingriffselement 13 zur Betätigung angeordnet (nicht dargestellt).

Im Zuge des Erzwingens einer Bewegung zurück in die Ausgangsposition Y1 wird der mit dem Magnetelement 2 verbundene Stegabschnitt 12 durch z.B. die rückstellende Auslösekraft des zweiten mechanischen Federspeichers 14 zunächst entgegen gesetzt elastisch verformt, wodurch bei einer Entspannung im Zuge einer Rückbewegung wiederum Energie freisetzbar ist, welche als Kraft in Richtung zur ersten Ausgangsstellung Y1 auf das Magnetelement 2 mechanisch beschleunigend einwirkt. Angemerkt sei, dass eine Anordnung, bei welcher das stegförmige Federelement 15 zur Betätigung zugbelastet wird, gleichermaßen denkbar ist, wobei z.B. die Ausgangsstellung der Anlageposition Y2 entspricht.

Der erfindungsgemäße Induktionsgenerator ist zum Beispiel in einem Funkschalter einsetzbar, welcher eine Senderbaugruppe und eine Antennenbaugruppe mit einer Antenne aufweist. Mittels der erzeugten Energie infolge einer Betätigung können sowohl bei einer Bewegung des Magnetelements 2 von der ersten Y1 in die zweite Y2 Anlageposition oder auch umgekehrt Signale generiert werden. Dazu wird die Energie der Senderbaugruppe zur Verfügung gestellt, z.B. mittels Ankontaktierelementen.

Der erfindungsgemäße Induktionsgenerator ist zum Beispiel vorteilhaft als Modul einstückig ausbildbar, wobei der Induktionsgenerator z.B. aus der Induktionsspule 4, dem Spulenkern 5, der Führungsvorrichtung, dem stegförmigen Federelement 15 und dem Magnetelement 2 besteht.

Der Induktionsgenerator ist erfindungsgemäß derart konzipiert, dass ein Lösen des Magnetelements 2 von den Schenkeln 6, 7 nur durch einen bestimmten Kraftbetrag, welcher im ersten mechanischen Federspeicher 12 aufgebaut wird, bestimmt wird. Der Kraftbetrag kann dabei bedingt durch Fertigungstoleranzen an den Einzelteilen bzw. Magnetkraft - Reibkraftstreuung schwanken, wodurch eine Schaltpunktungenauigkeit möglich wird.

Um die Schaltpunktgenauigkeit zu erhöhen, kann der Induktionsgenerator derart ausgelegt werden, dass bei einer Betätigung auf einem definierten Weg (= Schaltpunkt) im ersten mechanischen Federspeicher 12 z.B. nur 90% der zum Umschalten erforderlichen Kraft gespeichert werden. Die letzten 10% der Kraft können durch eine Direktbetätigung des Magnetelements 2 zugefügt werden.

Konstruktiv kann dies z.B. so realisiert werden, dass z.B. von dem Krafteinleitungselement 13, insbesondere einem oberen Ende, ein starrer Steg in die Richtung des Magnetelements 2 ausgebildet ist, der nach einem definierten Weg, korrespondierend mit einer elastischen Verformung des ersten mechanischen Federspeichers 12, direkt auf das Magnetelement 2 drückt und bei einer weiteren Betätigung dieses in Bewegung setzt.

Zusammenfassend wird erfindungsgemäß ein Induktionsgenerator geschaffen, der aufgrund der linearen Bewegung des Magnetelements 2 zwischen zwei definierten Anlagepositionen Y1, Y2 klein und einfach baut, wobei der Induktionsgenerator die Möglichkeit der mechanisch unterstützten Beschleunigung der Bewegung des Magnetelements 2 eröffnet, derart, dass eine hohe Energiemenge erzielbar ist. Insbesondere mittels des erfindungsgemäßen stegförmigen Federelements 15 ist eine kompakte Bauform realisierbar.

### Bezugszeichen

- 1: Induktionssystem
- 2: Magnetelement
- 3: Permanentmagnet
- 4: Induktionsspule
- 4a: zu den Schenkelenden benachbarte Stirnseite
- 4b: von den Schenkelenden entfernte Stirnseite
- 5: Spulenkern
- 6: erster Schenkel
- 6a: Außenseite
- 6b: Innenseite
- 7: zweiter Schenkel
- 7a: Außenseite
- 7b: Innenseite
- 8a, b, c: Anlageelemente
- 9, 10, 11: Polschuhe
- 10a, b: Endabschnitte Polschuh
- 12: erster mechanischer Federspeicher
- 12a: erstes Ende
- 12b: mit dem Magnetelement gekoppeltes Ende (zweites Ende)
- 13: Eingriffselement
- 14a: ortsfestes Ende
- 14b: mit dem ersten Ende verbundenes Ende
- 15: stegförmiges Federelement
- 15a: Krafteinleitungsbereich
- Y1, Y2: Anlagepositionen
- Y: vorgesehene Bewegungsrichtung
- S, N: Magnetpole
- A: Mittelachse
- F: Betätigungskraft

## Patentansprüche

1. Induktionsgenerator für einen Funkschalter (2) mit einem Magnetelement (2) sowie einer Induktionsspule (4) mit einem Spulenkern (5), welcher U-förmig gebildet ist, wobei für das Magnetelement (2) eine erste (Y1) und eine zweite (Y2) Anlageposition an den Schenkeln (6, 7) des Spulenkerns (5) definiert ist, bei Wechsel zwischen welchen jeweils eine Flussrichtungsumkehr im Spulenkern (5) erfolgt, wobei das Magnetelement (2) in einer Richtung (Y), in welcher die Schenkel (6, 7) zueinander benachbart sind, zwischen den Anlagepositionen (Y1, Y2) definiert linear beweglich an dem Induktionsgenerator (1) angeordnet ist, und wobei das Magnetelement (2) in der Richtung (Y), in welcher die Schenkel (6, 7) zueinander benachbart sind, drei Anlageelemente (8a, 8b, 8c) vorbestimmter magnetischer Polarität ausbildet, wobei jeweils zwei benachbarte Anlageelemente (8a, 8b; 8c, 8b) unterschiedlicher magnetischer Polarität in jeder Anlageposition (Y1, Y2) zur Anlage an den Schenkeln (6, 7) bringbar sind,
**dadurch gekennzeichnet,**
**dass** das Magnetelement (2) zur mechanisch beschleunigten Bewegung zwischen den Anlagepositionen (Y1, Y2) mit einem ersten mechanischen Federspeicher (12) zusammenwirkt, welcher bis zu einem bestimmten Energieniveau Auslöseenergie speichert, wobei ab Überschreiten des Energieniveaus ein Lösen des Magnetelements (2) aus der ersten (Y1) oder zweiten (Y2) Anlageposition ermöglicht ist, welche nach Verlassen der Anlageposition (Y1, Y2) zur Beschleunigung des Magnetelements (2) freisetzbar ist, und
**dass** der Induktionsgenerator einen zweiten mechanischen Federspeicher (14) zur Erzeugung einer Rückstellkraft für eine Bewegung des Magnetelements (2) aus der zweiten (Y2) in die erste (Y1) Anlageposition aufweist, welcher integral mit dem ersten mechanischen Federspeicher (12) gebildet oder mit diesem verbunden ist.

2. Induktionsgenerator nach Anspruch 1, **dadurch gekennzeichnet, dass** das Magnetelement (2) mittels einer Führungsvorrichtung definiert linear beweglich an dem Induktionsgenerator (1) angeordnet ist.

3. Induktionsgenerator nach einem der vorhergehenden Ansprüche, **dadurch gekennzeichnet, dass** das Magnetelement (2) einen E-förmigen Querschnitt aufweist.

4. Induktionsgenerator nach einem der vorhergehenden Ansprüche, **dadurch gekennzeichnet, dass** sich die Schenkel (6, 7) des Spulenkerns (5) jeweils zwischen zwei benachbarte Anlageelemente (8a, 8b; 8b; 8c) des Magnetelements (2) erstrecken, insbesondere zwischen jeweils zwei benachbarten Schenkeln der E-Form eintauchen.

5. Induktionsgenerator nach einem der vorhergehenden Ansprüche, **dadurch gekennzeichnet, dass** der erste (12) und der zweite (14) Federspeicher einstückig als stegförmiges Federelement (15) gebildet sind, wobei ein Krafteinleitungsbereich (15a) in einem Mittenbereich des stegförmigen Federelements (15) vorgesehen ist.

6. Induktionsgenerator nach Anspruch 5, **dadurch gekennzeichnet, dass** das stegförmige Federelement (15) sich in einer Richtung (Y), in welcher die Schenkel (6, 7) zueinander benachbart sind, von einem ersten stirnseitigen Ende (4b) der Induktionsspule (4) zu einem weiteren, zu dem Magnetelement (2) benachbarten stirnseitigen Ende (4a) erstreckt, wobei ein erstes Ende (14a) des stegförmigen Federelements (15) an dem ersten Ende (4b) abgestützt ist, und wobei ein zweites Ende (12b) mit dem Magnetelement (2) zur Einleitung einer Kraft in der Richtung (Y), in welcher die Schenkel (6, 7) zueinander benachbart sind, gekoppelt ist.

7. Funkschalter mit einer Senderbaugruppe und einer Antenne, **dadurch gekennzeichnet, dass** der Funkschalter einen Induktionsgenerator nach einem der vorhergehenden Ansprüche aufweist.

## Claims

1. Induction generator for a radio switch having a magnetic element (2) and an induction coil (4) with a coil core (5), which has a U-shaped form, wherein a first abutting position (Y1) and a second abutting position (Y2) on the legs (6, 7) of the coil core (5) are defined for the magnetic element (2) and a reversal in the direction of flow in the coil core (5) takes place in each case when there is a change between these positions, wherein the magnetic element (2) is arranged on the induction generator (1) linearly movably in a defined manner between the abutting positions (Y1, Y2) in a direction (Y) in which the legs (6, 7) are adjacent to one another, and wherein the magnetic element (2) forms in the direction (Y) in which the legs (6, 7) are adjacent to one another three abutting elements (8a, 8b, 8c) of predefined magnetic polarity, wherein in each case two adjacent abutting elements (8a, 8b; 8c, 8b) of different magnetic polarity can be brought into abutment on the legs (6, 7) in each abutting position (Y1, Y2),
**characterized**
**in that**, for mechanically accelerated movement between the abutting positions (Y1, Y2), the magnetic element (2) interacts with a first mechanical spring store (12), which stores triggering energy up to a certain energy level, wherein a release of the magnetic element (2) from the first abutting position (Y1) or the second abutting position (Y2) is made possible from when the energy level is exceeded, which energy can be released for accelerating the magnetic element (2) after leaving the abutting position (Y1, Y2), and
**in that** the induction generator has a second mechanical spring store (14), which is formed integrally with the first mechanical spring store (12) or is connected thereto, for generating a restoring force for a movement of the magnetic element (2) out of the second abutting position (Y2) into the first abutting position (Y1).

2. Induction generator according to Claim 1, **characterized in that** the magnetic element (2) is arranged on the induction generator (1) linearly movably in a defined manner by means of a guiding device.

3. Induction generator according to one of the preceding claims, **characterized in that** the magnetic element (2) has an E-shaped cross section.

4. Induction generator according to one of the preceding claims, **characterized in that** the legs (6, 7) of the coil core (5) respectively extend between two adjacent abutting elements (8a, 8b; 8b; 8c) of the magnetic element (2), in particular in each case enter between two adjacent legs of the E shape.

5. Induction generator according to one of the preceding claims, **characterized in that** the first spring store (12) and the second spring store (14) are formed in one piece as a bar-shaped spring element (15), wherein a force introduction region (15a) is provided in a middle region of the bar-shaped spring element (15).

6. Induction generator according to Claim 5, **characterized in that** the bar-shaped spring element (15) extends in a direction (Y) in which the legs (6, 7) are adjacent to one another, from a first extreme end (4b) of the induction coil (4) to a further extreme end (4a), adjacent to the magnetic element (2), wherein a first end (14a) of the bar-shaped spring element (15) is supported on the first end (4b), and wherein a second end (12b) is coupled with the magnetic element (2) for the introduction of a force in the direction (Y), in which the legs (6, 7) are adjacent to one another.

7. Radio switch having a transmitter assembly and an antenna, **characterized in that** the radio switch has an induction generator according to one of the preceding claims.

## Revendications

1. Générateur à induction pour un interrupteur radio comprenant un élément magnétique (2) ainsi qu'une bobine d'induction (4) avec un noyau de bobine (5) formé en forme de U, une première position d'appui (Y1) et une deuxième position d'appui (Y2) étant définies pour l'élément magnétique (2) au niveau des branches (6, 7) du noyau de bobine (5), dont l'alternance entre lesquelles positions entraîne une inversion du sens du flux dans le noyau de bobine (5), l'élément magnétique (2) étant disposé de manière déplaçable linéairement de façon définie au niveau du générateur à induction (1) entre les positions d'appui (Y1, Y2) dans une direction (Y) dans laquelle les branches (6, 7) sont adjacentes l'une à l'autre, et l'élément magnétique (2) constituant, dans la direction (Y) dans laquelle les branches (6, 7) sont adjacentes l'une à l'autre, trois éléments d'appui (8a, 8b, 8c) de polarité magnétique prédéfinie, à chaque fois deux éléments d'appui adjacents (8a, 8b ; 8c, 8b) de polarité magnétique différente pouvant être amenés dans chaque position d'appui (Y1, Y2) en appui contre les branches (6, 7),
**caractérisé en ce que**
l'élément magnétique (2) coopère avec un premier accumulateur à ressort mécanique (12) pour le mouvement accéléré mécaniquement entre les positions d'appui (Y1, Y2), lequel accumulateur à ressort accumule de l'énergie de déclenchement jusqu'à un niveau d'énergie déterminé, un relâchement de l'élément magnétique (2) de la première position d'appui (Y1) ou de la deuxième position d'appui (Y2) étant possible à partir du dépassement du niveau d'énergie, laquelle énergie de déclenchement, après la sortie de la position d'appui (Y1, Y2), pouvant être libérée pour l'accélération de l'élément magnétique (2), et
**en ce que** le générateur à induction présente un deuxième accumulateur à ressort mécanique (14) pour générer une force de rappel pour un déplacement de l'élément magnétique (2) de la deuxième position d'appui (Y2) dans la première position d'appui (Y1), lequel accumulateur à ressort est formé intégralement avec le premier accumulateur à ressort mécanique (12) ou est connecté à celui-ci.

2. Générateur à induction selon la revendication 1, **caractérisé en ce que** l'élément magnétique (2) est disposé sur le générateur à induction (1) de manière déplaçable linéairement de façon définie au moyen d'un dispositif de guidage.

3. Générateur à induction selon l'une quelconque des revendications précédentes, **caractérisé en ce que** l'élément magnétique (2) présente une section transversale en forme de E.

4. Générateur à induction selon l'une quelconque des revendications précédentes, **caractérisé en ce que** les branches (6, 7) du noyau de bobine (5) s'étendent à chaque fois entre deux éléments d'appui adjacents (8a, 8b ; 8b ; 8c) de l'élément magnétique (2), en particulier plongent entre deux branches adjacentes respectives de la forme du E.

5. Générateur à induction selon l'une quelconque des revendications précédentes, **caractérisé en ce que** le premier (12) et le deuxième (14) accumulateur à ressort sont formés d'une seule pièce en tant qu'élément de ressort en forme de nervure (15), une région d'introduction de force (15a) étant prévue dans une région centrale de l'élément de ressort en forme de nervure (15).

6. Générateur à induction selon la revendication 5, **caractérisé en ce que** l'élément de ressort en forme de nervure (15) s'étend dans une direction (Y) dans laquelle les branches (6, 7) sont adjacentes l'une à l'autre, depuis une première extrémité frontale (4b) de la bobine d'induction (4) jusqu'à une autre extrémité frontale (4a) adjacent à l'élément magnétique (2), une première extrémité (14a) de l'élément de ressort en forme de nervure (15) étant supportée sur la première extrémité (4b), et une deuxième extrémité (12b) étant accouplée à l'élément magnétique (2) pour l'introduction d'une force dans la direction (Y) dans laquelle les branches (6,7) sont adjacentes l'une à l'autre.

7. Interrupteur radio comprenant un module émetteur et une antenne, **caractérisé en ce que** l'interrupteur radio présente un générateur à induction selon l'une quelconque des revendications précédentes.
